# EUROPEAN PATENT APPLICATION

(11) **EP 3 726 381 A1**
(43) Date of publication of application: **21.10.2020**
(21) Application number: 19169803.4
(22) Date of filing: 17.04.2019
(51) Int. Cl.: G06F 9/451, G06F 16/957, G06F 3/14

(54) **METHOD AND SYSTEM FOR SHARED INFORMATION BROWSING**

(71) Applicant: Togee Technologies AB, 113 50 Stockholm (SE)
(72) Inventor: DIEGELMANN, Daniel, 121 45 Johanneshov (SE); ANDERSSON, Peter, 128 66 Sköndal (SE); KHAN, Zohaib, 195 36 Märsta (SE)
(74) Representative: Noréns Patentbyrå AB

(57) **Abstract**

Method for browsing a set of information using particular information addresses corresponding to views, the method comprising the steps
a) at a first time, a first user selecting a first view based on a first address, which is displayed in a first GUI by a first computer client (101);
b) providing to a second computer client (102) said first address;
c) the second client causing a second GUI to display said first view;
d) at a second, later time, the first user selecting a second view, which is displayed in said first GUI;
e) automatically determining that the second address may be insufficient for the second client to display the second view;
f) the first client sampling a current state of the first GUI as a raster image;
g) providing to the second client the image; and
h) the second client displaying the image.

## Description

The present invention generally relates to collaborative data sharing, editing and refinement. More particularly, it relates to a method and a system for shared information browsing. For instance, the browsing can be a shared internet web browsing or browsing of a common set of information, such as in the form of a common graphical user interface.

Hence, it is question of a "shared" browsing of a "common" graphical resource. As the term is used herein, that the browsing is "shared" means that at least two physically distanced users (i.e., users at different locations) simultaneously accesses such a "common" graphical resource via a respective distanced client (101) computer device, in the sense that a user interaction performed by a first user in relation to the graphical resource is reflected in a corresponding way in the graphical resource as correspondingly presented to a second, physically distanced user.

There are several known ways of "browsing" an information set. Apart from the very well-known example of browsing the internet ("web browsing") using a web browser, it is also known to browse a more limited information space, such as a 3D model of a building or a human body, using a suitably designed interactive graphical interface comprising a graphical representation of the 3D model in question. As the term is used herein, "browsing" can (but does not have to) also mean showing an information stream, such as a video stream. Generally, such "browsing" is performed by selecting different "views" of the information set being browsed, and a graphical user interface presenting such views to the browsing user.

Many times, users want to share such browsing experiences between them, and in particular when located at different places. For instance, a first user may want to show a second user a particular piece of information which is browsed by the first user. Such sharing of browsed pieces of information is often made clearer if annotations can be used, such as the first user highlighting a particular piece of information of special significance.

There already exists a number of collaborative solutions for shared browsing. For instance, cloud-based document editors, such as Google® Docs and Microsoft® Office365® allow several users to view and edit the same information contents simultaneously on physically distant screen monitors. There are also shared web browsing solutions, allowing a first user to share a web browsing experience with a second user. Simple screen sharing is a third example of a conventional solution. Social media solutions such as Twitter® define an information set which is common for many users, that each can browse the information set in question.

Moreover, making annotations in digital media is known as such, and even on top of web pages.

However, browsable information sets are often complex, and browsing of such information sets is not always easily shared. For instance, hyperlinks, embedded pieces of information, varying digital user rights and similar may apply to a particular information set, making it difficult to share a particular browsing experience with a distant other user in a seamless manner.

Hence, there is a need for a solution for performing seamless shared browsing, preferably allowing low communication footprint, low latency and simplicity. Furthermore, such a solution should be generally applicable to diverse sets of information and be flexible enough to function as intended even when the information set to be browsed is not fully predetermined.

The present invention solves the above described problems.

Hence, the invention relates to a method for browsing a set of information, which set of information is browsable based on particular information addresses in relation to the set of information, each such information address corresponding to a particular respective view of the set of information, the method comprising the steps a) at a first time, and using a first computer client in turn providing a first, interactive GUI (graphical user interface) to a first user, the first user selecting a first view or a corresponding first information address of the information set, which first view is then displayed to the first user in said first GUI; b) providing to a second computer client said first information address; c) the second computer client causing a second GUI to display said first view of the information set based on said first information address; d) at a second, later time, the first user selecting a second view or a corresponding second information address of the information set, which second view is then dis-played to the first user in said first GUI; e) automatically determining that the second information address itself is or may be insufficient for the second client computer to be able to cause the second GUI to display the second view of the information set; f) the first computer client sampling a current state of the first GUI as a still or moving raster image; g) providing to the second client computer the captured still or moving raster image; and h) the second computer client causing the second GUI to display the provided still or moving image.

In the following, the invention will be described in detail, with reference to exemplifying embodiments of the invention and to the enclosed drawings, wherein:
Figure 1 is an overview of a computer network in which a method according to the present invention can be implemented;
Figure 2a is a flowchart illustrating a method according to the present invention;
Figure 2b is a flowchart illustrating a method according to the present invention;
Figures 3-12 are examples of graphical user interface (GUI) views, where a left-hand part of each of Figure 3-11 is a first client GUI view and the right-hand part is a second client GUI; and
Figure 13 illustrates an example of GUI views, but showing a first client GUI (left), a second client GUI (middle) and a third client GUI (right).

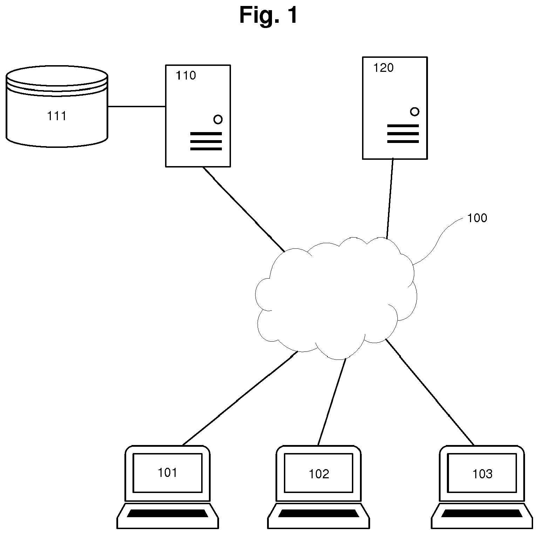

Hence, Figure 1 illustrates a computer network system which is suitable for performing a method according to the present method. The computer network system comprises a first server 110, which is an information server comprising or being connected to a database 111 in turn holding a browsable information set which the server makes available for browsing. Such browsing is performed by querying the server 110 for a particular information view of the information set, or for a particular information address pertinent to the information set, and the server 110 responding to such a query by returning a particular slice or subset of the information set identified by the said view or address in question. Hence, each such view corresponds to an information address.

Many different types of information sets can be browsed using a method according to the present invention. The following description will focus on the illustrative example of web browsing, using URL (Uniform Resource Locator) information addresses. In this example, a "view" is a particular web page being displayed in a browser window, and an "information address" is a URL, which is used to identify a particular "view". In this case, the server 110 may be a conventional web server.

Another example is a browsable information set in the form of a set of vector or raster graphics, where a "view" is a 2D or 3D subset, such as a detail or cross-section, of the larger browsable information set, represented by an "information address" specifying the coordinates for the subset. For instance, a very detailed 2D raster image may be browsed by specifying the coordinates for different rectangular detail parts of the larger image; or a complex 3D vector model may be browsed by specifying a camera location and direction for making a 2D rendering, or by specifying the coordinates for a 2D cross-section through the 3D vector model. In this example, the server 110 may be arranged to accept queries containing relevant information addresses and to return, as a response to such queries, the details of a corresponding view, such as a 2D binary raster image.

An additional example of browsable information is a browsable data stream, such as a video stream. In this case, a "view" may be a particular video frame, or a set of video frames, being displayed in a GUI.

Each such "view" may in turn comprise static or dynamic information, and in particular at least partly moving images.

It is realized that, even though the examples provided herein mainly focus on the simple example of web browsing, the principles described are equally applicable to other types of information sets than those of web servers.

In particular, the information set itself may be static, such as a statically defined set of graphics data; or dynamic, such as defined as a consequence of interaction with querying clients. In particular, the information set may even be constructed by cooperating client users during the course of the method according to the present invention. For instance, the information set may be a collaboratively constructed 2D or 3D graphics environment, document or model jointly built by collaborating client users while browsing the information set in a shared manner using the present invention.

Furthermore, information sets that are relevant for the purposes of the present invention include "mixed" information sets, in the sense that they contain both subsets that are globally available for all connected client users and subsets that are only available to some client users. Such availability may vary due to many reasons, such as login requirements or other security barriers; performance requirements on the part of the client for rendering or otherwise viewing a requested view; geographical restrictions; and so forth. Hence, the present invention is concerned with the shared browsing of information sets where parts (views) of such information sets are not possible for all users to actually view using their respective clients.

The server 110 may be a single, standalone computer server, or it may be distributed across several physical or virtual computer servers, as the case may be. The corresponding applies to the database 111.

The corresponding also applies to a second server 120, which may be used for controlling the shared aspects of the shared browsing process, such as keeping track of annotations made by the clients (see below).

Both the first 110 and the second 120 servers are connected to the internet 100, as is a first 101, a second 102 and a third 103 computer clients, so that all internet-connected entities described herein are interconnected. The clients 101, 102, 103 may also be standalone or distributed, physical or virtual computer clients, each arranged to provide a respective graphical user interface (GUI), preferably an interactive GUI, to a respective user of the computer client in question.

It is understood that the present method is completely computer-implemented, using digital computer equipment. Hence, the visual contents of said GUIs (the "views") are digitally stored and produced, and all communication described herein between different computer entities is digital and using suitable digital communication protocols.

Both the servers 110, 120 and the clients 101, 102, 103 may comprise or at least use (run on) conventional computer hardware, in turn comprising a CPU, a RAM memory and a computer bus. The clients 101, 102, 103 each also comprises or controls a respective 2D or 3D image viewing apparatus, such as a computer graphics screen display or a 3D graphics visualization apparatus, such as a set of stereoscopic 3D viewing glasses or a hologram generator. The image viewing apparatus is arranged to display views of the said type, corresponding to respective information addresses, relating to the browsed information set in question. Each client 101, 102, 103 may comprise or be associated with respective browsing software, arranged to execute on or from the client 101, 102, 103 in question and being active to render or otherwise display said views to the user in question. For instance, such browsing software may be or comprise a web browser.

In particular, each of the computer clients 101, 102, 103 may be a portable digital device, such as a tablet computer or a smartphone. In fact, any digital general-purpose programmable computer device with a display screen or any other means for showing image information will work with the present invention.

A system suitable for use in a method according to the present invention also comprises software functionality for controlling the shared browsing aspects according to the present invention. Such shared browsing software functionality may be comprised in the respective browsing software of each client 101, 102, 103 and/or be comprised in a software function arranged to execute on or from the second server 120. In some cases, each client 101, 102, 103 may be arranged with browsing software arranged to provide the functions for shared browsing described herein, which browsing software may be arranged to be completely controlled from the client 101, 102, 103 in question. In other embodiments, at least some, or even all, of the shared browsing functionality may be delegated to the second server 120, such as the second server 120 providing APIs (Application Programming Interfaces) used by the clients 101, 102, 103 for amending views so as to achieve the shared browsing functionality described herein. Even, the second server 120 may be a gateway to the information-keeping first server 110, so that the second server 120 accepts queries from the clients 101, 102, 103 for particular views, which queries are forwarded from the second server 120 to the first server 110 and the results of which queries are returned as view information to the querying client 101, 102, 103 in question but after amendments to the views so as to provide the shared browsing functionality described herein.

Whenever referring to what steps the server 110, 120 or clients 101, 102, 103 take in the present description, it is realized that it in general is a respective software function of the server or client in question that actually is programmed to take the step in question, itself or in collaboration with other software entities.

Typically, each client 101, 102, 103 is used by a respective user participating in the shared browsing according to present invention.

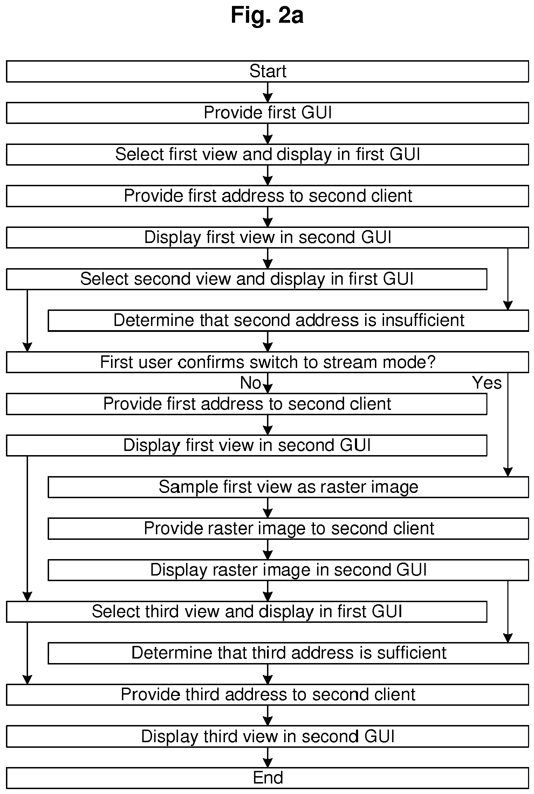

Figure 2a shows a flow chart illustrating a method according to the present invention, for browsing a set of information of the said type, being browsable based on particular information addresses in relation to the set of information, each such information address corresponding to a particular view of the set of information.

In a first step, the method starts.

In a subsequent step, performed at a first point in time, a first interactive GUI is provided by the first computer client 101 on the said image viewing apparatus of the first client 101, to a first user.

In a subsequent step, the first user selects a first view or a corresponding first information address of the information set, which first view is then displayed to the first user in said first GUI.

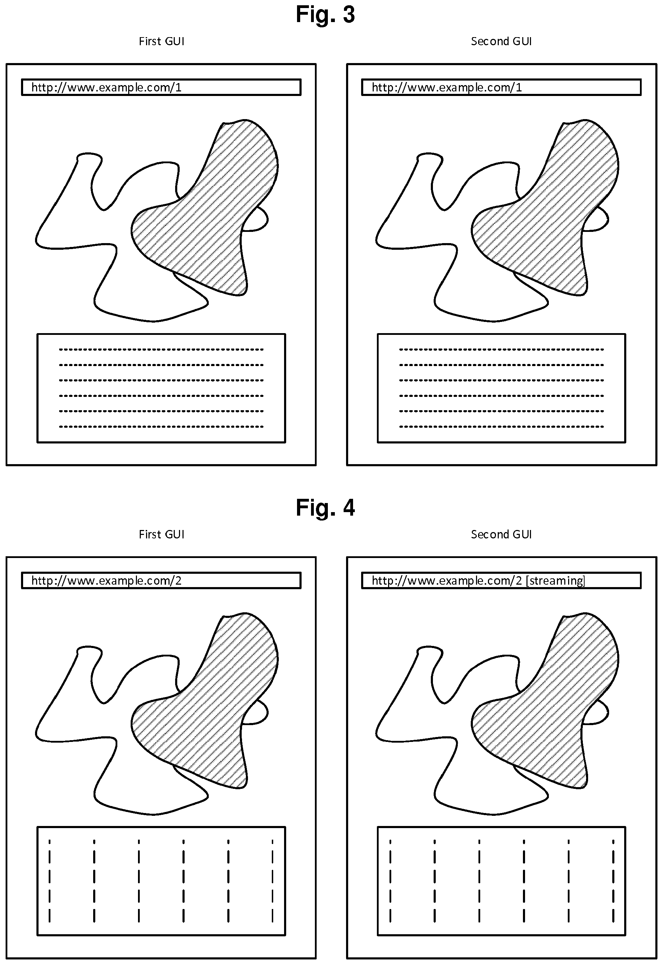

The left part of Figure 3 illustrates the resulting view shown in the first GUI on the screen display viewed by the first user, after the first user has entered the information address (URL) "http://www.example.com/1". The view is hence a web page provided by the web server 110 via the internet 100 to the first computer client 101 and displayed on the said screen display. In this particular example, the view comprises a first hollow shape, an overlapping second dashed shape and a rectangle with broken horizontal lines (that may be, for instance, textual content). It is realized that Figure 3 is only an example, and that the view in question can be any web page.

It is also realized that the view is displayed in reaction to the first user specifying the information address. However, in other embodiments the client 101 or even the web server 110 will automatically provide the information address, such as in connection to an automatic web redirect or a timer-based redirect initiated by a web browser run on the client 101.

It may also be the case that the first user or the first client 101 directly specifies the desired view, such as by selecting a delta in relation to a particular displayed view as opposed to an absolute information address. For instance, a user may move the viewpoint of a rendering camera slightly based on a currently displayed view of a jointly browsed 3D model, this way defining a new view to be displayed.

In a subsequent step, said first information address is provided to the second computer client 102. This provision takes place via the internet, and may be performed directly between the respective software function of the clients 101, 102 or via the software functionality of the server 120, as has been described above. As described above, the first information address, which in this example is the URL "http://www.example.com/1", identifies the first view as currently shown to the first user of the first client 101.

The provision of the first information address to the second computer client 102 may take place automatically, such as whenever the first view is updated in the first GUI, or at predetermined/regular time intervals.

Then, in a subsequent step, the second computer client 102 causes the second GUI, by the image viewing apparatus of the second client 102, to display the first view (the same first view as currently being displayed to the first user) of the information set based on said first information address. This may involve that the second client 102 queries the first server 110, using the first information address, for data using which the first view can be shown in the second GUI. In the present example, the second client 102 provides the first server 110 with the URL "http://www.example.com/1" and in return is provided with HTML code corresponding to the first view. Hence, the second client 102 does in this case not receive the first view from the first client 101, but rather only the first information address.

The result is displayed in the right-hand part of Figure 3, showing the displayed second GUI contents of a screen display of the second client 102. As can be seen from Figure 3, the second GUI will, at this point, correspond to the first GUI shown in the left-hand part of Figure 1. Also, for informational purposes for the benefit of the second user, the currently viewed information address (the URL) is filled into the address field of the browser constituting the second GUI.

In a subsequent step, which is performed at a second, later time, the first user selects a second view or a corresponding second information address of the information set, for instance by clicking a hyperlink in the first web page view or by manually entering a new URL. The second view is generally different than the first view. The second view is then, as a consequence of said selecting, displayed to the first user in the first GUI.

In the present example, the second information address is the URL "http://www.example.com/2", defining the second view. However, as opposed to the first view, the second view is not, or may not be, available for display, partly or in its entirety, by the second client 102, even though the first client 101 has such availability to the second view. For instance, this may be due to the fact that the first user selected a URL leading to a private web area, such as a private social network page or a page the access to which is restricted to paying customers. The first client 101 may not have sufficient knowledge regarding if the second client 102 has or does not have access to the view in question via said corresponding information address.

It is noted that the first client 101 will in general be capable of automatically and independently detecting that the second client 102 may not have access to the first view using the first information address. For instance, in case the first view is in an area requiring a login, such as a social network platform (for instance Facebook®), a browser incorporated in the first GUI will in general have relevant login credentials stored for automatic background login when the first user enters the corresponding URL. Such automatic login is standard browser functionality, and will not be described in detail herein. Other examples include the automatic recognition of digital media rights and encryption. Hence, the recognition of the first GUI that such automatic login or similar is required may trigger the first client 101 to determine that the second view may not be reachable to the second client 102.

Then, in another step also performed at said second time, it is automatically determined that the second information address itself is, or may be, insufficient for the second client 102 computer to be able to cause the second GUI to display the second view of the information set. This automatic determination may be made by the first client 101, by for instance noting that a login is required to display the second view, or that the retrieval of the second view data requires access to cryptographic keys only available to the first client 101 (or at least not surely available to the second client 102).

In particular, said automatic determination may comprise a determination of the presence of a first user authentication or login which is required to display the second information view, and/or a determination of if a link to a set of auxiliary information is accessible via said second information address outside of a context in which the first GUI is present. An example of the latter is a piece of embedded information, such as a piece of graphics, which is provided from an external information source to which the second client 102 may not have access. For instance, the contents (vertical broken lines) of the lower rectangular box shown in the left-hand side of Figure 4 may be fetched during the rendering of the second view from such an external information source, which may be different from the first server 110, and for one reason or the other (such as login requirements or encryption) not available with certainty for the second client 102.

However, the automatic determination may also be performed, in a corresponding manner, by the second server 120 upon request by the first client 101. For instance, the second server 120 may be used as an intermediary web server, using the first server 110 as a secondary web server between the clients 101, 102 and which the second server 120 acts as an intermediary filter.

Both in case the first client 101 and the second server 120 performs said automatic determination, the determination may be based on a predetermined set of rules defining what types of second views are likely to be displayable by the second client 102 and which types are not.

In a different embodiment, the second client 102 itself however performs the automatic determination, such as in response to a query to this end posed by the first client 101 to the second client 102 or when receiving the second information address. In this case, the second client 102 may actually determine whether or not the second view can be displayed or not with certainty.

In either case, once it has been determined that the second view can possibly, probably or even surely not be viewed by the second client 102, in a subsequent step the first computer client 101 instead samples a current state of the first GUI as a still or moving raster image. For instance, a screen shot of the displayed web page in Figure 4 may be captured by the first client 101 and stored as a binary raster image, such as a .BMP or .JPG image.

Herein, the term "raster image" is to be interpreted as image information stored in the form of a dot matrix data structure, where each matrix entry corresponds to a visual quality of a particular pixel or voxel.

The captured image may also be a moving image, such as a .MPEG file. This is in particular useful when the first GUI features graphically movable part, such as film clips. The first client 101 or the second server 120 may automatically determine whether or not a static or moving image is to be used, based on a predetermined set of rules and using as input information regarding the type of graphical content comprised in the first view and/or bandwidth or other hardware requirements/prerequisites of the second client 102.

In a subsequent step, the captured still or moving raster image is provided to the second client 102, such as by the first client 102, via the internet 100. Depending on the nature of the raster image, it may be sent once to the second client 102, or an image stream session may be initiated, whereby the first client 101 continuously streams an updated moving raster image as continuously sampled from the displayed first GUI. It is noted that, since the second client 102 may not have access to the source of the view, the capturing/sampling must be done directly from the first GUI.

In a subsequent step, the second computer client 102 causes the second GUI to display the still or moving raster image received as mentioned, and not a view being produced based on the second information address. The result is illustrated in the right-hand part of Figure 4, showing the second GUI displaying a raster image being a captured screenshot of the second view being displayed in the first GUI (left-hand side of Figure 4).

The second information address may or may not be provided to the second client 102. In case it is provided (which is the case in the present example), it may be displayed also in the second GUI. In the right-hand part of Figure 4, the second GUI features an address field displaying the second information address with the addition "[streaming]", indicating that what is displayed is not an information address-based view but a static or moving raster image of the information address-based view currently being provided and displayed in the first GUI. In general, the second GUI may display information indicating that it is in "streaming" mode. This information may be displayed in any suitable manner, for example with the use of a flashing icon or the modified URL illustrated in Figure 4.

Hence, this way the first and second users can participate in a shared browsing activity in the sense that the first user can browse the information set by selecting different views and/or addresses, and the second user can follow the browsing activity of the first user in the second GUI, while automatically updating to reflect each browsing step performed by the first user in the first GUI. This can be achieved in a seamless manner even in case the first user browses to views that would potentially or surely not be possible to reach for the second user, using the second GUI, should the second user try to do so directly based upon the information addresses in question. When a view is displayed in the first GUI the information address of which is not sufficient for the second client to reach, the shared browsing simply switches to a raster graphics-based streaming-type information sharing instead, preserving the user experience for the second user.

It is noted that, as long as the information address is sufficient for the second client 102 to reach the view in question, it suffices to communicate the information address in question, achieving low bandwidth footprint.

In case the first client 101 or the second server 120 decides to switch to a "streamed" shared browsing, and consequently sends the second client 102 a captured raster image, the second client 102 may determine that it in fact can reach the view in question using the information address in question. In this case, the second client 102 may be arranged to fetch the view in question by querying the first server 110 using the information address, instead of displaying the raster image.

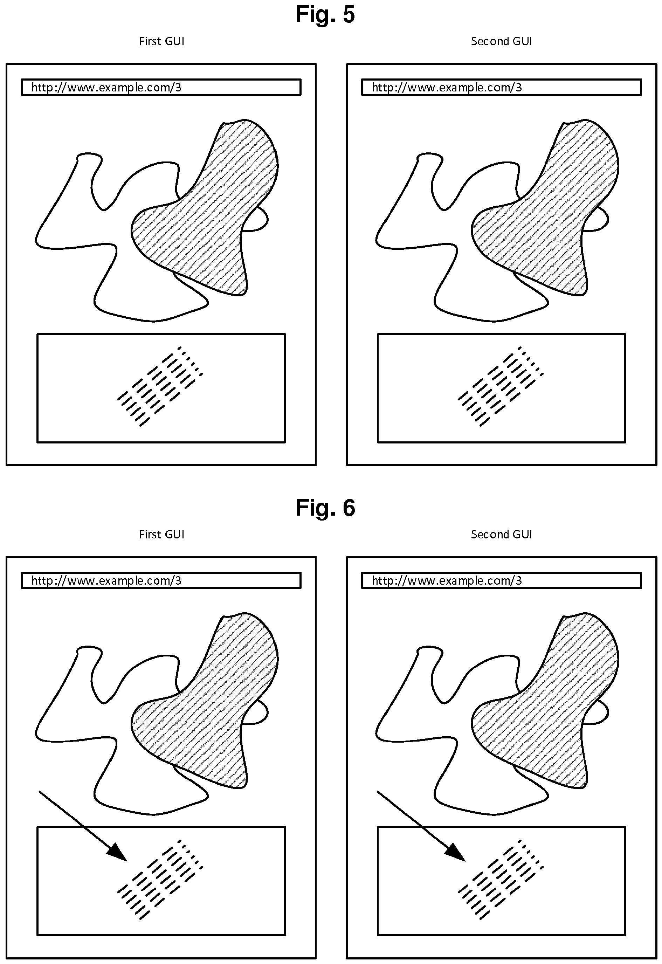

In a subsequent step, performed at a third, later time, the first user selects a third view or a corresponding third information address of the information set. This third view is then displayed by the first client 101 to the first user in said first GUI. The result is shown in the left-hand part of Figure 5, showing the first GUI after the display of the third view. As can be seen from Figure 5, the third information address is "http://www.example.com/3", and the third view encompasses the hollow and dashed shapes as well as a rectangle with slanting, broken lines.

This third view may be similar to the first view (above), in that it is readily available for fetching, such as from the first server 110, by the second client 102 based on the third information address.

As a matter of fact, in an additional step, it may be automatically determined, such as by the first computer client 101, the second server 120 or the second client 102 (as described above in relation to the second information address), that the third information address is sufficient for the second client 102 computer to be able to cause the second GUI to display the third view of the information set. This determination may be made upon information regarding a login requirement or similar, in a way which corresponds to what has been described above in relation to the determination with respect to the second information address.

Then, in a subsequent step, said third information address is provided to the second computer client 102, and the second computer client 102 in turn causes the second GUI to display said third view of the information set based on said received third information address. The result is shown in the right-hand side of Figure 5, where it is noted that the displayed view is identical to the view displayed in the left-hand side of Figure 5 (in the first GUI), and where the address field no longer states "[streaming]".

It is noted that the second client fetches third view information from the first server 110 based on the third information address, as opposed to fetching the third view itself from the first client 101.

Hence, the shared browsing which started out in the first view based purely on the first information address, and which then automatically switched to "streaming mode" when viewing the second view, has now automatically reverted again to "information address mode" when viewing the third view. This way, the more network expensive "streaming mode" shared browsing is only used when actually needed.

As noted above, when the second computer client 102 causes the second GUI to display a certain view of the information set based upon a certain information address, the second computer client 102 queries the information set for the certain view using the certain information address, such as from the first server 110. The response to such a query may be the on any suitable format, but is preferably not in the form of a raster image representing the view (even though it may the case when jointly browsing a film, for instance). Instead, the view in question is preferably communicated from the first server 110 to the second client 102 in some type of meta format, requiring far less data as compared to for instance a bitmap representation of the view in question. Examples of such meta formats include a HTML encoded web page or a vector representation of a graphical view. Since the browsed information set may contain mixed media types, such meta format information may be very compressed for certain types of visual information (such as textual information presented in a particular font in the certain view), while raster image data is used to convey other types of visual information (such as imagery).

In a subsequent step, the method ends.

In one particularly important embodiment of the present invention, the first GUI is arranged, such as via this functionality being implemented in a software function executing on or from the first client 101, to allow the first user to make annotations in an annotation layer, which annotation layer is graphically overlaid on the first view in the first GUI. Such annotations may be any digitally stored graphics, such as lines, text, computer pen input, highlighting, pasted graphics or any other graphics which may be produced, selected or otherwise provided by the first user to the first GUI. That the annotation layer is "graphically overlaid" means that it is visible on top of the view currently being shown in the first GUI, preferably as a topmost graphical layer. This layering may be achieved by the first client 101 as a result of the rendering of the first GUI displayed image.

It is noted that the annotations described herein do generally and preferably not affect the view on top of which they are displayed, but are instead simply graphically overlaid.

An example of such annotation is illustrated in the left-hand side of Figure 6, illustrating the third view in the first GUI with an annotation arrow which has been added by the first user. Such an arrow may be drawn by the first user using drawing tools provided directly in the first GUI, as an integrated part of the first GUI. In addition to such drawing tools, the first and/or second GUI may also comprise a built-in web browser, which is then the web browser illustrated in Figures 3-5. The drawing tools may, for instance, be made available via a conventional right-click menu or in any other suitable manner, in the interactive GUI in question.

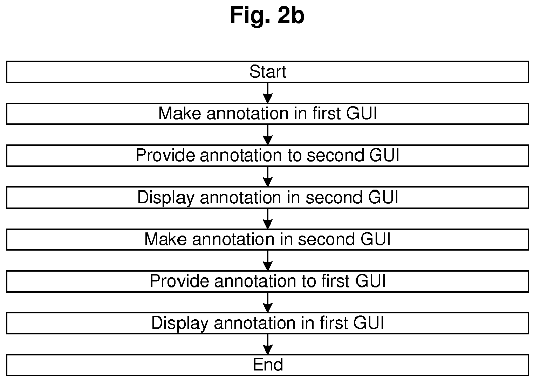

Figure 2b illustrates an annotation aspect of the present invention, which may be used in combination with the method illustrated in Figure 2a. For instance, the method steps shown in Figure 2b may be performed sequentially after the method steps shown in Figure 2a.

Hence, in a first step, the method starts.

In a subsequent step, the first user makes such an annotation in the first GUI.

In a subsequent step, the said annotation is provided, such as directly by the first client 101 or via the second server 120, to the second computer client 102.

Annotations may be anchored or otherwise related visually and geometrically to particular defined objects in the view in relation to which the annotations are made. For instance, if an arrow is drawn by the first user to point from a particular first object to a particular second object, information identifying the first and second objects may be stored as part of the definition of the annotation in question. Then, when the annotation is displayed in a different GUI, such information relating the annotation to particular objects may be used when rendering the annotation in said different GUI. This may mean that the exemplifying arrow is drawn at a slightly different place, or at a slightly different angle and/or length, in said different GUI, depending on any detail differences in how the view is presented in different GUIs, that may be presented on differently sized screen displays and so forth.

It is noted that, when the shared browsing switches to "streaming" mode, the annotations will still be correctly displayed, since they will then relate to the captured still or moving raster image being communicated instead of the information address. The annotations may even be part of the captured raster image in question.

Then, in a subsequent step, the second computer client 102 may cause the annotation layer, comprising said annotation, to be graphically overlaid on the view currently shown in the second GUI. In the present example, illustrated in the right-hand side of Figure 6, the annotation layer is overlaid on top of the third view, using information address-based shared browsing. However, it is realized that the annotation layer may alternatively be overlaid on top of the second view, making use of a "streamed" shared browsing.

This way, the first user can make annotations in the first GUI, in relation to the information which is jointly browsed, which annotations are then automatically propagated to the second GUI for the second user to see.

Correspondingly, the second user can make annotations in the second GUI, in a separate annotation layer or in the same annotation layer as used by the first user to make annotations in the first GUI. In the case of a shared annotation layer, this may be jointly managed by the clients 101, 102 or by the second server 120, as the case may be.

Hence, the second GUI may be arranged to allow the second user to make annotations in an annotation layer, which annotation layer is graphically overlaid on the view in question in the second GUI, in a way corresponding to what has been said regarding the annotation layer in the first GUI.

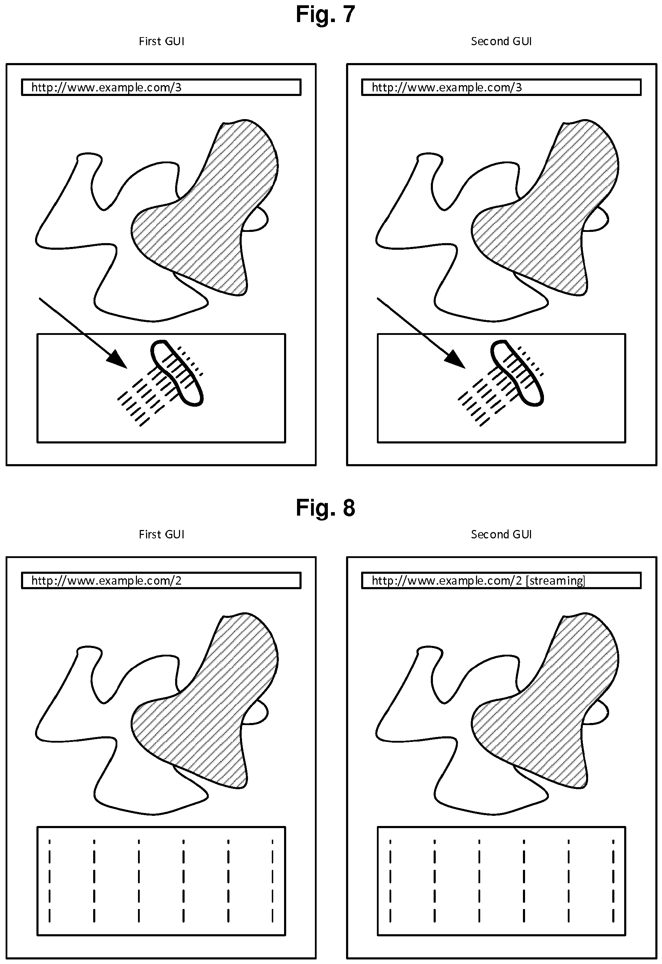

Namely, in a subsequent step, such an annotation may be made by the second user, using the second GUI. The result is illustrated in the right-hand side of Figure 7, in which an annotation of an encircling shape has been made by the second user to highlight a particular set of slanting lines in the lower rectangle in the displayed third view.

Then, in a subsequent step, the annotation made by the second user is provided to the first computer client 101, and the first client 101 then causes the annotation layer in question to be graphically overlaid on the view in question in the first GUI. The left-hand side of Figure 7 illustrates the result, where the encircling shape is displayed in the same manner as in the second GUI shown in the right-hand side of Figure 7. It is noted that the first and second GUIs may now have one jointly used annotation layer, or one separate annotation layer for each of the first and second users' annotations, respectively. In the latter case, it is preferred that later submitted annotations have overlay precedence over earlier annotations.

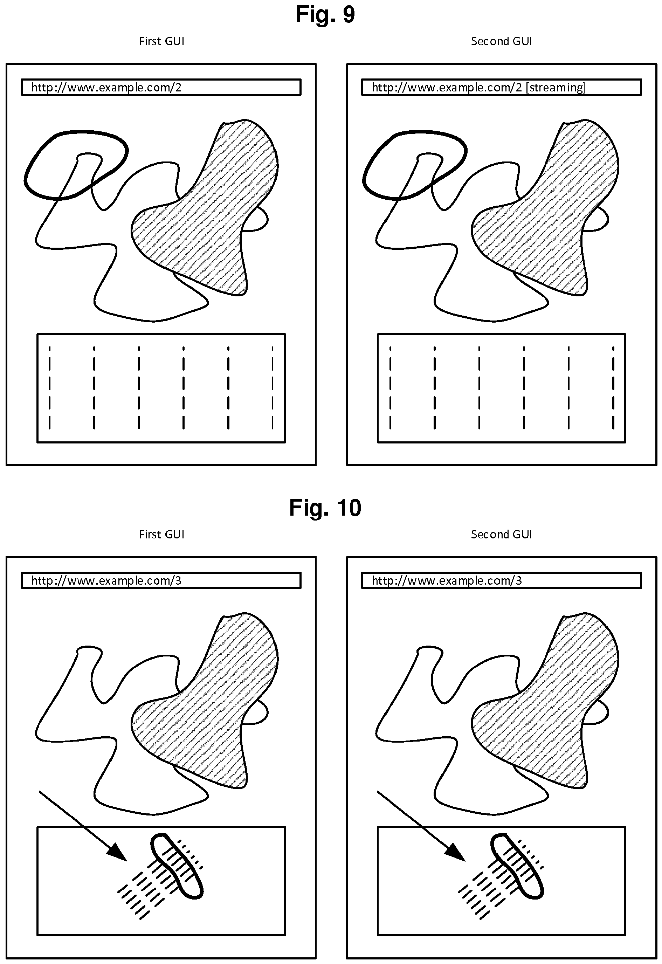

It is noted that annotations may be used also for "streamed" shared browsing experiences. This is illustrated in Figure 8, showing in its left-hand side the first GUI when the first user browses back to the above described second view, and where the second GUI as a result is updated as illustrated in the right-hand side of Figure 8. Then, as is shown in Figure 9 on the left-hand side, the first user makes an annotation in the form of a ring highlighting a part of the hollow shape. In the right-hand side of Figure 9, it is shown how the annotation automatically appears in the second GUI, overlaid on the raster image depicting the first GUI. The second (and any additional connected) user may also make annotations in the second GUI, that are then automatically replicated in the first GUI.

In a subsequent step in the flowchart shown in Figure 2b, the method ends.

However, the users may continue the shared browsing activity. In the following, a number of particularly interesting additional aspects are discussed for such browsing.

In some embodiments, where at least one of the first and second users is allowed to make annotations in a certain annotation layer in relation to a certain view, the annotations may be associated with that certain view and only shown for that view. In particular, such annotations associated with the certain view in question may be stored and recalled once that certain view is again shown in the first or second GUI. In other words, a view different from said certain view with which the annotations in question are associated is subsequently selected. Then, the annotations that were associated with the certain view are no longer visible in the GUI in question. however, when said certain view is again selected, the annotations in question are recalled and automatically graphically overlaid on said particular view in the GUI in question. The associating and storing may be performed jointly by the clients 101, 102, 103, in a distributed/replicated data storing manner, and/or be performed by the second server 120.

This is illustrated in Figures 9 and 10. The round annotation shown in Figure 9 is associated with the second view and stored, for instance in the second server 120. When the first user switches back to the third view, such as by entering the corresponding URL in the address field of the browser, the state of the first and second GUIs shift to what is illustrated in Figure 10. As noted, the annotations introduced in connection to Figures 6 and 7 are again shown, since they were associated with the third view and stored when then. Hence, as the first user moves from the second to the third view the annotations associated with the second view are removed and the annotations associated with the third view are shown.

The view itself may also be stored and recalled, in a process similar to conventional caching, so that its contents can be recalled from a cached copy stored in the second server 120 or one or both of the clients 101, 102, instead of being reloaded from the first server 110 once revisited. The caching may be activated for the particular address as a result of annotations being made in relation to the view in question, in order to guarantee that any dynamic alterations made to the view corresponding to the information address in question do not affect a graphical relationship between a particular annotation and the contents of the view in question.

Hence, a representation of a particular view may also be stored and recalled, in addition to the said annotation. The representation of said particular view may then be a representation of the view as such, as opposed to merely being the corresponding information address. For instance, the cached representation may be in the form of a raster image of the particular view, or a metadata text representation of said particular view. Such a metadata representation may be an HTML representation of a web page or any other structured data allowing the client 101, 102 in question to render the view in a way graphically corresponding to the way the view appeared at the time the annotation was made.

In case such caching is used, the GUI in question may be arranged with an option for the user in question to manually refresh the view by querying the first server 110 using the first information address.

As an alternative or addition thereto, a view being associated with one or several annotations may be analysed for graphical changes of the particular view, such as in connection to a recall of the view in question. Then, a graphical discrepancy between a past and a current state of the particular view in question may be identified, and any annotations being associated with the view in question may then be graphically modified, such as geometrically modified, as needed in adaptation to said discrepancy. For instance, if the size of the hollow and/or dashed shape in the GUI has changed, this may affect the vertical position of the rectangle with the broken lines, and the vertical position of the corresponding annotation shown in Figure 10 is then automatically modified in the GUI so as to be positioned at the same place in relation to the said broken lines. Such modification may, for instance, take place using a previously identified and stored anchoring or other relational information for the annotation with respect to objects in the view in question, as has been described above.

In one particularly preferred embodiment, the above discussed automatic detection of the insufficiency of the information address for the other GUI to show the jointly browsed view does not automatically result in the shared browsing switching to a "streaming" mode browsing. Instead, the automatic detection of this insufficiency results in that the computer client 101 the GUI of which has browsed to this insufficient information address view presents to the corresponding user an option whether the user in question wants to continue the shared browsing in relation to the other computer client 102 using sampled raster image information or using an information address. In case the user in question affirms this question, the method proceeds as discussed above. Otherwise, the information address is sent to the other client 102 even though it may be insufficient, and the other client 102 displays whatever view results from a query using the potentially insufficient information address.

The description so far has focussed on the case in which a single, common view is displayed jointly by both a first and a second GUI. However, the GUIs in question may also display several, parallel views, such as several parallel web pages in one and the same GUI. This may, for instance, be practical when two users are jointly browsing a particular topic, allowing several views to be open simultaneously in the respective GUI and interrelating the different information available in each such view.

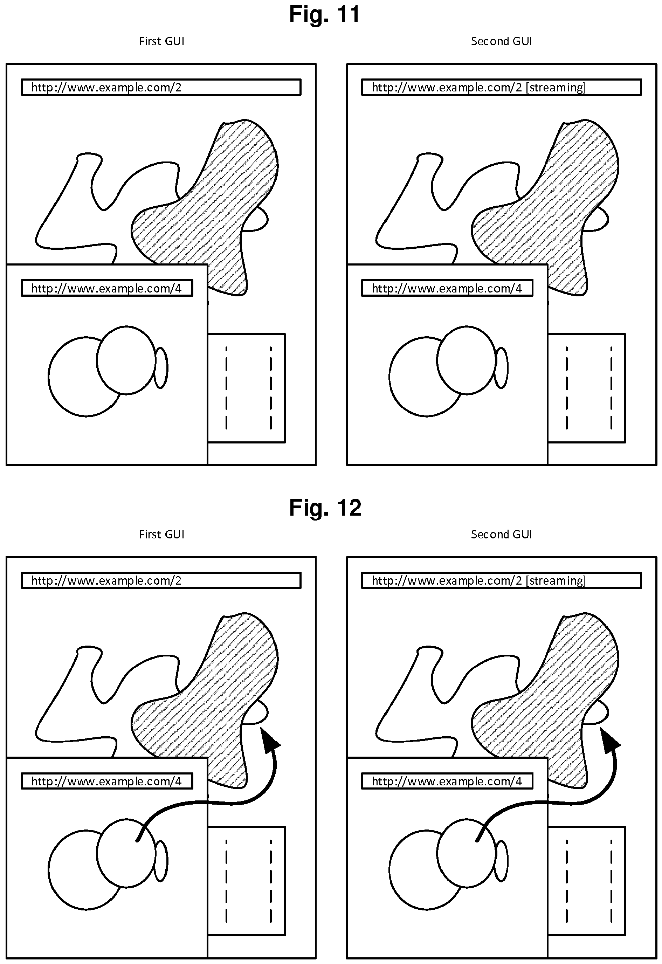

One example of this is illustrated in Figures 11 and 12, in which an additional, fourth view (having address "http://www.example.com/4") is overlaid on top of the second view. Of course, instead of overlaying one such view on top of another, the views can be tiled or arranged in any other useful manner. In the example illustrated in Figures 11 and 12, the second view is in "streamed" mode while the fourth is in "information address" mode, but it is realized that any combination of "streamed" and "information address" modes may be used for different combined views, depending on the sufficiency of each respective information address.

As is illustrated in Figure 12, the first user can then make annotations in an annotation layer, in a way broadly corresponding to what has been discussed above, but which annotation layer is graphically overlaid on, and associated with, both the second and fourth views in the first GUI. Hence, the annotation layer may geometrically cover more than one view in the GUI. Then, such annotations that are common for several views may be provided to the second client 102, which in turn may cause the annotation layer in question to be graphically overlaid on the second and fourth views in the second GUI for the second user to see. In the example of Figure 12, the annotation is an arrow running from the fourth view to the second view.

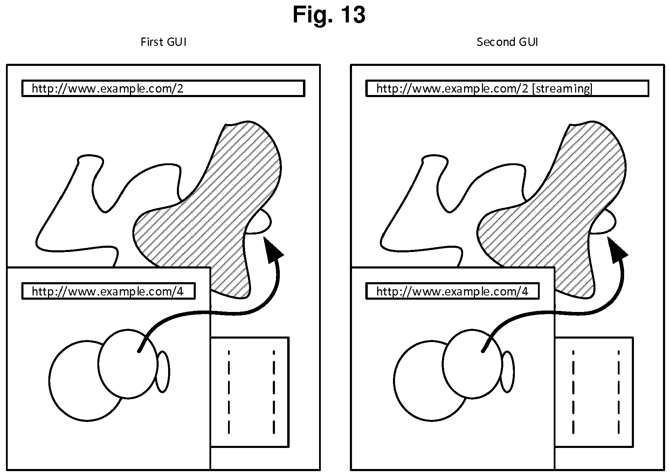

The present invention is also not limited to the shared browsing of two users using two clients. Figure 13 illustrates the situation in which a third user, using the third client 103, connects to the shared browsing. Then, the same views and annotations are displayed as for the first and second GUIs, for instance after the third client 103 posing a query to the second server 120 regarding a current state of the shared browsing. As can be seen from Figure 13, the third GUI is then also in a "streamed" browsing state with respect to the second view. However, it is realized that each of the participating clients 101, 102, 103, and for each respective displayed view, may display a raster image or the view based on the corresponding information address irrespectively of the choice made in relation to the other clients.

In some embodiments, one or several co-browsing clients 101, 102, 103 in a method according to the present invention can be designated as browsing "leaders", meaning that each such browsing "leader" has the capability of changing the view currently jointly browsed, and non-"leader" client do not. In other embodiments, any participating co-browsing client 101, 102, 103 may have this capability. In each case, it is preferred that any co-browsing client 101, 102, 103 has the capability of making annotations to be viewed by all other co-browsing clients.

Annotations of the types described herein may also have other properties, such as being associated with respective timers, so that they are automatically removed from all GUIs after a particular time duration of at a predetermined event.

Above, preferred embodiments have been described. However, it is apparent to the skilled person that many modifications can be made to the disclosed embodiments without departing from the basic idea of the invention.

As stated above, the shared browsing according to the present invention may be used for browsing of any information set which can be represented digitally and graphically using views identified by corresponding information addresses.

It is also realized that the examples provided in the Figures are simplified, and that the GUIs produced by said clients 101, 102, 103 in practise may implement many additional functionality and details not covered in the above description.

The various embodiments described herein are intended to illustrate various typical situations that may occur during shared browsing. It is realized that everything which has been described in connection to one embodiment is fully applicable to other embodiments, as compatible.

Hence, the invention is not limited to the described embodiments, but can be varied within the scope of the enclosed claims.

## Claims

1. Method for browsing a set of information, which set of information is browsable based on particular information addresses in relation to the set of information, each such information address corresponding to a particular respective view of the set of information, the method comprising the steps
a) at a first time, and using a first computer client (101) in turn providing a first, interactive GUI (graphical user interface) to a first user, the first user selecting a first view or a corresponding first information address of the information set, which first view is then displayed to the first user in said first GUI;
b) providing to a second computer client (102) said first information address;
c) the second computer client (102) causing a second GUI to display said first view of the information set based on said first information address;
d) at a second, later time, the first user selecting a second view or a corresponding second information address of the information set, which second view is then displayed to the first user in said first GUI;
e) automatically determining that the second information address itself is or may be insufficient for the second client (102) computer to be able to cause the second GUI to display the second view of the information set;
f) the first computer client (101) sampling a current state of the first GUI as a still or moving raster image;
g) providing to the second client (102) computer the captured still or moving raster image; and
h) the second computer client (102) causing the second GUI to display the provided still or moving image.

2. Method according to claim 1, wherein the method further comprises the steps
i) at a third, later time, the first user selecting a third view or a corresponding third information address of the information set, which third view is then displayed to the first user in said first GUI;
j) automatically determining that the third information address is sufficient for the second client (102) computer to be able to cause the second GUI to display the third view of the information set;
k) providing to the second computer client (102) said third information address;
l) the second computer client (102) causing the second GUI to display said third view of the information set based on said third information address.

3. Method according to claim 1 or 2, wherein, when the second computer client (102) causes the second GUI to display a certain view of the information based upon a certain information address, the second computer client (102) queries the information set for the certain view using the certain information address.

4. Method according to any one of the preceding claims, wherein the automatic determination in step e comprises a determination of the presence of a first user authentication or login which is required to display the second information view.

5. Method according to any one of the preceding claims, wherein the automatic determination in step e comprises a determination of if a link to a set of auxiliary information is accessible via said second information address outside of a context in which the first GUI is present.

6. Method according to any one of the preceding claims, wherein the first GUI allows the first user to make an annotation in an annotation layer, which annotation layer is graphically overlaid on the first view in the first GUI, wherein said annotation is provided to the second computer client (102), and wherein the second computer client (102) causes the annotation layer to be graphically overlaid on the first and/or second view in the second GUI.

7. Method according to any one of the preceding claims, wherein the second GUI allows the second user to make an annotation in an annotation layer, which annotation layer is graphically overlaid on the first or second view in the second GUI, wherein said annotation is provided to the first computer client (101), and wherein the first computer client (101) causes the annotation layer to be graphically overlaid on the first and/or second view in the first GUI.

8. Method according to claim 6 or 7, wherein at least one of said first and second users is allowed to make a particular annotation in a particular annotation layer in relation to a particular view, wherein a view different from said particular view is subsequently selected, wherein said particular annotation is associated with said particular view and stored, and wherein, when said particular view is again selected, said particular annotation is recalled and automatically graphically overlaid on said particular view.

9. Method according to claim 8, wherein a representation of said particular view is also stored and recalled, and wherein said representation of said particular view is a representation of the view as such as opposed to the corresponding information address, such as a raster image of the particular view or a metadata text representation of said particular view, for instance an HTML representation.

10. Method according to claim 8 or 9, wherein said particular view is analysed for graphical changes of the particular view in connection to said recall, wherein a graphical discrepancy between a past and a current state of the particular view in question is identified, and wherein said particular annotation is graphically modified, such as geometrically modified, in adaptation to said discrepancy.

11. Method according to any one of the preceding claims, wherein said first and second views are web pages, and wherein said first and second information addresses are URLs.

12. Method according to any one of the preceding claims, wherein step e comprises, upon said automatic detection, the first computer client (101) presenting to the first user an option whether the first user wants to continue the shared browsing in relation to the second computer client (102) using sampled information or using an information address.

13. Method according to any one of the preceding claims, wherein the method further comprises both said first and said second GUI displaying several views in parallel, whereby said first and second views are displayed in parallel with a fourth view.

14. Method according to claim 13, wherein the first GUI allows the first user to make an annotation in an annotation layer, which annotation layer is graphically overlaid on the first and fourth views in the first GUI, wherein said annotation is provided to the second computer client (102), and wherein the second computer client (102) causes the annotation layer to be graphically overlaid on the first and fourth views in the second GUI.
